# EUROPEAN PATENT APPLICATION

(11) **EP 4 444 029 A1**
(43) Date of publication of application: **09.10.2024**
(21) Application number: 24166778.1
(22) Date of filing: 27.03.2024
(51) Int. Cl.: H04W 76/28, H04W 72/541

(54) **COMMUNICATION OF INFORMATION RELATING TO CELL DTX/DRX PATTERNS**

(30) Priority: 06.04.2023 IN 202341026121
(71) Applicant: Nokia Technologies Oy, 02610 Espoo (FI)
(72) Inventor: HMEDOUSH, Iman, Massy (FR); BALASUBRAMANIAM, Sankaran, Bangalore (IN); LASELVA, Daniela, Klarup (DK); KHLASS, Ahlem, Massy (FR); HELMERS, Hakon, Sceaux (FR); PANTELIDOU, Anna, Antony (FR)
(74) Representative: Nokia EPO representatives

(57) **Abstract**

There is disclosed an apparatus. According to some examples, the apparatus comprises means for sending, to a node, information of at least one of a discontinuous reception and a discontinuous transmission pattern configuration of a cell, wherein the information comprises a mapping of an indication of an activity status in the cell to one or more time periods.

## Description

### FIELD

The present application relates to a method, apparatus, and computer program. In particular, but not exclusively, the present application relates to discontinuous reception and discontinuous transmission in cells.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet. In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). Other examples of communication systems include 5G-Advanced (NR Rel-18 and beyond) and 6G.

A feature of modern communication systems is Cell Discontinuous Transmission and Reception (cell DTX/DRX). Cell DTX/DRX is a mechanism where a cell can be turned off, partially or completely, so that the cell transmission/reception for data traffic and/or a part/all the reference signals are omitted during the cell DTX/DRX non-active times. The cell is then able to enter an energy-saving state (sleep state) and save energy during these non-active times.

### SUMMARY

According to a first aspect there is disclosed an apparatus comprising: means for sending, to a node, information of at least one of a discontinuous reception and a discontinuous transmission pattern configuration of a cell, wherein the information comprises a mapping of an indication of an activity status in the cell to one or more time periods.

According to some examples, the discontinuous reception pattern may be referred to as a DRX pattern and the discontinuous transmission pattern may be referred to as a DTX pattern.

According to some examples, the mapping of an indication of an activity status in the cell comprises a bitmap information element.

According to some examples, each bit in the bitmap represents the cell activity at a slot or subframe level in the at least one of a discontinuous reception and discontinuous transmission pattern.

According to some examples" in the bitmap, a first value is used to represent activity in the cell, and a second value is used to represent inactivity in the cell.

According to some examples, the first value comprises a 1 and the second value comprises 0.

According to some examples, the bitmap comprises a first bitmap corresponding to discontinuous reception and a second bitmap relating to discontinuous transmission.

According to some examples, the indication of an activity status in the cell comprises a probability vector information element.

According to some examples, the probability vector comprises a plurality of probability elements, each probability element representing the cell activity at a slot or subframe level in the at least one of a discontinuous reception and discontinuous transmission pattern.

According to some examples, each probability element in the vector is expressed as a decimal or percentage value.

According to some examples, the discontinuous reception or discontinuous transmission pattern configuration comprises one or more of: a time offset for initiation of the discontinuous reception or discontinuous transmission cycle; a duration of the discontinuous reception or discontinuous transmission cycle.

According to some examples, the apparatus comprises means for applying the discontinuous reception or discontinuous transmission pattern at the apparatus.

According to some examples, the apparatus comprises a base station of the cell.

According to some examples, the node comprises a base station.

According to some examples, the node comprises a neighbouring base station.

According to a second aspect there is disclosed an apparatus comprising at least one processor and at least one memory storing instructions that, when executed by the at least one processor, cause the apparatus at least to: send, to a node, information of at least one of a discontinuous reception and a discontinuous transmission pattern configuration of a cell, wherein the information comprises a mapping of an indication of an activity status in the cell to one or more time periods.

According to a third aspect there is provided an apparatus comprising: circuitry for sending, to a node, information of at least one of a discontinuous reception and a discontinuous transmission pattern configuration of a cell, wherein the information comprises a mapping of an indication of an activity status in the cell to one or more time periods.

According to a fourth aspect there is provided a method performed by an apparatus, comprising: sending, to a node, information of at least one of a discontinuous reception and a discontinuous transmission pattern configuration of a cell, wherein the information comprises a mapping of an indication of an activity status in the cell to one or more time periods.

According to some examples, the discontinuous reception pattern may be referred to as a DRX pattern and the discontinuous transmission pattern may be referred to as a DTX pattern.

According to some examples, the mapping of an indication of an activity status in the cell comprises a bitmap information element.

According to some examples, each bit in the bitmap represents the cell activity at a slot or subframe level in the at least one of a discontinuous reception and discontinuous transmission pattern.

According to some examples, in the bitmap, a first value is used to represent activity in the cell, and a second value is used to represent inactivity in the cell.

According to some examples, the first value comprises a 1 and the second value comprises 0.

According to some examples, the bitmap comprises a first bitmap corresponding to discontinuous reception and a second bitmap relating to discontinuous transmission.

According to some examples, the indication of an activity status in the cell comprises a probability vector information element.

According to some examples, the probability vector comprises a plurality of probability elements, each probability element representing the cell activity at a slot or subframe level in the at least one of a discontinuous reception and discontinuous transmission pattern.

According to some examples, each probability element in the vector is expressed as a decimal or percentage value.

According to some examples, the discontinuous reception or discontinuous transmission pattern configuration comprises one or more of: a time offset for initiation of the discontinuous reception or discontinuous transmission cycle; a duration of the discontinuous reception or discontinuous transmission cycle.

According to some examples, the method comprises applying the discontinuous reception or discontinuous transmission pattern at the apparatus.

According to some examples, the apparatus comprises a base station of the cell.

According to some examples, the node comprises a base station.

According to some examples, the node comprises a neighbouring base station.

According to a fifth aspect there is provided a computer readable medium comprising instructions which, when executed by an apparatus, cause the apparatus to perform at least the following: sending, to a node, information of at least one of a discontinuous reception and a discontinuous transmission pattern configuration of a cell, wherein the information comprises a mapping of an indication of an activity status in the cell to one or more time periods.

According to a sixth aspect, there is provided a non-transitory computer readable medium comprising program instructions that, when executed by an apparatus, cause the apparatus to perform at least the following: sending, to a node, information of at least one of a discontinuous reception and a discontinuous transmission pattern configuration of a cell, wherein the information comprises a mapping of an indication of an activity status in the cell to one or more time periods.

According to a seventh aspect there is disclosed an apparatus comprising: means for receiving, from a node, information of at least one of a discontinuous reception and a discontinuous transmission pattern configuration of a cell, wherein the information comprises a mapping of an indication of an activity status in the cell to one or more time periods.

According to some examples, the apparatus comprises means for aligning operation of the apparatus with the at least one of a discontinuous reception and discontinuous transmission pattern configuration.

According to some examples, the mapping of an indication of an activity status in the cell comprises a bitmap information element.

According to some examples, each bit in the bitmap represents a slot or subframe in the at least one of a discontinuous reception and a discontinuous transmission pattern.

According to some examples, in the bitmap, a first value is used to represent activity in the cell, and a second value is used to represent inactivity in the cell.

According to some examples, the first value comprises a 1 and the second value comprises 0.

According to some examples, the bitmap comprises a first bitmap corresponding to discontinuous reception and a second bitmap relating to discontinuous transmission.

According to some examples, the mapping of an indication of an activity status in the cell comprises a probability vector information element.

According to some examples, the probability vector comprises a plurality of probability elements, each probability element representing a slot or subframe in the at least

According to some examples, each probability element in the vector is expressed as a decimal or percentage value.

According to some examples, the at least one of a discontinuous reception and a discontinuous transmission pattern configuration comprises one or more of: a time offset for initiation of the discontinuous reception or discontinuous transmission cycle; a duration of the discontinuous reception or discontinuous transmission cycle.

According to some examples, the apparatus comprises a base station.

According to some examples, the node comprises a neighbouring base station.

According to an eighth aspect there is disclosed an apparatus comprising at least one processor and at least one memory storing instructions that, when executed by the at least one processor, cause the apparatus at least to: receive, from a node, information of at least one of a discontinuous reception and a discontinuous transmission pattern configuration of a cell, wherein the information comprises a mapping of an indication of an activity status in the cell to one or more time periods.

According to a ninth aspect there is provided an apparatus comprising: circuitry for receiving, from a node, information of at least one of a discontinuous reception and a discontinuous transmission pattern configuration of a cell, wherein the information comprises a mapping of an indication of an activity status in the cell to one or more time periods.

According to a tenth aspect there is provided a method comprising: receiving, from a node, information of at least one of a discontinuous reception and a discontinuous transmission pattern configuration of a cell, wherein the information comprises a mapping of an indication of an activity status in the cell to one or more time periods.

According to some examples, the method comprises aligning operation of the apparatus with the at least one of a discontinuous reception and discontinuous transmission pattern configuration.

According to some examples, the mapping of an indication of an activity status in the cell comprises a bitmap information element.

According to some examples, each bit in the bitmap represents a slot or subframe in the at least one of a discontinuous reception and a discontinuous transmission pattern.

According to some examples, in the bitmap, a first value is used to represent activity in the cell, and a second value is used to represent inactivity in the cell.

According to some examples, the first value comprises a 1 and the second value comprises 0.

According to some examples, the bitmap comprises a first bitmap corresponding to discontinuous reception and a second bitmap relating to discontinuous transmission.

According to some examples, the mapping of an indication of an activity status in the cell comprises a probability vector information element.

According to some examples, the probability vector comprises a plurality of probability elements, each probability element representing a slot or subframe in the at least

According to some examples, each probability element in the vector is expressed as a decimal or percentage value.

According to some examples, the at least one of a discontinuous reception and a discontinuous transmission pattern configuration comprises one or more of: a time offset for initiation of the discontinuous reception or discontinuous transmission cycle; a duration of the discontinuous reception or discontinuous transmission cycle.

According to some examples, the apparatus comprises a base station.

According to some examples, the node comprises a neighbouring base station.

According to an eleventh aspect there is provided a computer readable medium comprising instructions which, when executed by an apparatus, cause the apparatus to perform at least the following: receiving, from a node, information of at least one of a discontinuous reception and a discontinuous transmission pattern configuration of a cell, wherein the information comprises a mapping of an indication of an activity status in the cell to one or more time periods.

According to a twelfth aspect, there is provided a non-transitory computer readable medium comprising program instructions that, when executed by an apparatus, cause the apparatus to perform at least the following: receiving, from a node, information of at least one of a discontinuous reception and a discontinuous transmission pattern configuration of a cell, wherein the information comprises a mapping of an indication of an activity status in the cell to one or more time periods.

### DESCRIPTION OF FIGURES

Embodiments will now be described, by way of example only, with reference to the accompanying Figures in which:
Figure 1 shows a representation of a network system according to some example embodiments;
Figure 2 schematically shows a cell DTX pattern according to an example;
Figure 3 schematically shows a cell DRX pattern according to an example;
Figure 4 schematically shows a cell activity bitmap according to an example;
Figure 5 schematically shows a cell activity bitmap according to an example;
Figure 6 schematically shows a cell activity bitmap according to an example;
Figure 7 schematically shows a cell activity probability vector according to an example;
Figure 8 schematically shows a cell DTX and/or DRX configuration according to an example;
Figure 9 schematically shows a signalling diagram according to an example;
Figure 10 shows a schematic representation of a control apparatus according to an example;
Figure 11 shows a schematic representation of user equipment apparatus according to an example;
Figures 12 to 13 are flow charts of methods according to some examples;
Figure 14 shows a schematic representation of a non-volatile memory medium storing instructions which when executed by a processor allow a processor to perform one or more of the steps of the methods of some embodiments.

### DETAILED DESCRIPTION

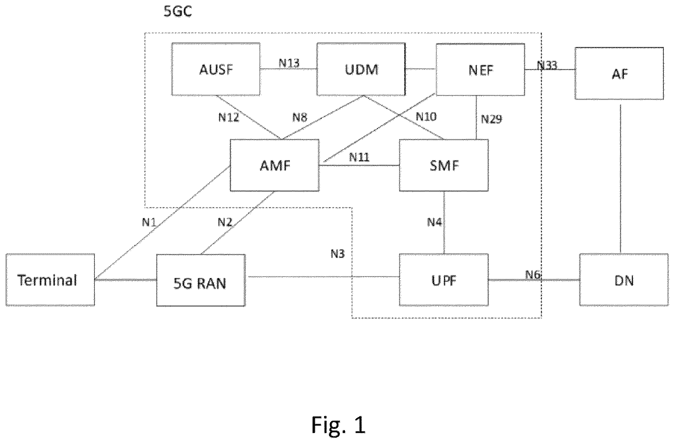

In the following, certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figure 1 to assist in understanding the technology underlying the described examples.

Figure 1 shows a schematic representation of a 5G system (5GS), which is provided by way of example of a communication system. The 5GS may comprise a terminal or user equipment (UE), a 5G radio access network (5GRAN) or next generation radio access network (NG-RAN), a 5G core network (5GC), one or more application function (AF) and one or more data networks.

The 5G-RAN may comprise one or more gNodeB (gNB) or one or more gNodeB (gNB) distributed unit functions connected to one or more gNodeB (gNB) centralized unit functions.

The 5GC may comprise the following entities: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF). Figure 1 also shows the various interfaces (N1, N2 etc.) that may be implemented between the various elements of the system.

It is noted that whilst some embodiments are described in relation to 5G networks, similar principles can be applied in relation to other networks and communication systems such as 5G-Advanced networks or 6G networks.

In practical implementations, energy saving may be sought, both for the environment and the operator's operating expenses (OpEx). Energy may be consumed by a radio access network (RAN). In particular, energy may be consumed by the static part of a RAN which is continuously consumed to maintain the operation of radio access devices, even when the data transmission/reception is not ongoing. Cell discontinuous transmission and/or discontinuous reception (DTX/DRX) may be introduced to reduce the static part of RAN power consumption. In DTX/DRX, there will be one or more time periods where the cell is not active i.e. is not transmitting or receiving.

The early phase of Rel-18 (SID in RP-221443) discusses cell DTX/DRX functionality as part of a study item on conducted energy-saving techniques.

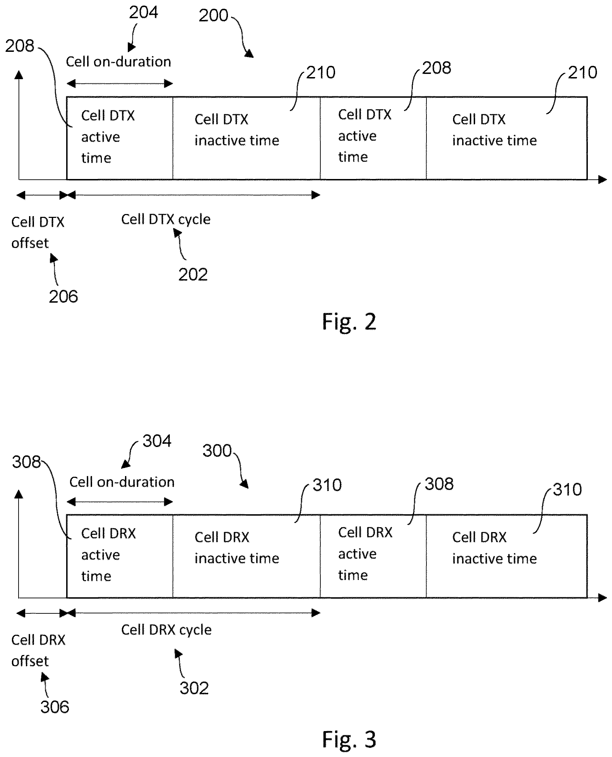

Fig. 2 schematically shows a cell DTX pattern 200. The cell DTX pattern 200 may be defined by three parameters: cell DTX cycle 202; cell DTX on-duration period 204; cell DTX offset 206. The cell DTX cycle 202 defines the periodicity with which DTX periods repeat. The cell DTX on-duration period 204 defines the duration of the active time within one DTX cycle. The cell DTX offset defines the point in time (for example, the subframe number or slot number), where a given DTX pattern starts (e.g., relative to an absolute time). Two main periods may be observed within a cell DTX cycle: the cell DTX active time 208; the cell DTX non-active (or inactive) time 210. The cell DTX active time 208 defines the time during which cell transmissions may be performed. The cell DTX non-active/ inactive time 210 defines the period during which certain restrictions may be applied on the cell transmission of DL data traffic and/or all or a part of DL control channels or DL reference signals.

Fig. 3 shows a cell DRX pattern 300. The cell DRX pattern 300 may be defined by three parameters: cell DRX cycle 302; cell DRX on-duration period 304; cell DRX offset 306. The cell DRX cycle 302 defines the periodicity with which DRX periods repeats. The cell DRX on-duration period 304 defines the duration of the active time within one DRX cycle. The cell DRX offset defines the point in time (for example, the subframe number or slot number), where a given DRX pattern starts (e.g., relative to an absolute time). Two main periods may be observed within a cell DRX cycle: the cell DRX active time 308; the cell DRX non-active (or inactive) time 310. The cell DRX active time 308 defines the time during which cell reception may be performed. The cell DRX non-active/ inactive time 310 defines the time during which DRX specific restrictions apply on the NG-RAN node's reception of UL data traffic and/or all or a part of UL control channels or UL reference signals.

In some instances, it can be observed that RACH, paging and SIBs may not be omitted for RRC IDLE/INACTIVE UEs in the non-active period of cell DTX and/or cell DRX. Further, CONNECTED UE(s) may perform RACH and receive SIBs in non-active periods of cell DTX and/or DRX. The exact set of signals/channels that the UE may be expected to not transmit or receive is under discussion in 3GPP RAN1/RAN2. There may be separate cell DTX and cell DRX configurations. For example, the cell DTX can have different configuration parameters (e.g., active time and/or non-active time) compared to the cell DRX configuration parameters.

It is noted that, in practice, the NG-RAN node may use one or more cell DTX/DRX patterns for each cell. In some examples, in a given cell one cell DTX/DRX pattern is activated at a given time. In some examples, the pattern to activate at a given time may depend on different conditions. These conditions may include any one or more of: cell load; UE distribution within the cell; mobility conditions; time of the day; traffic type etc. However, when using cell DTX/DRX, if the cell DTX or the cell DRX active periods of neighbouring interfering cells are not partially or completely coordinated, inter-cell interference issues may arise, even for low or moderate traffic loads. This reduces the cell capacity and/or increases energy consumption due to the eventual need for retransmissions or increased transmission power to overcome neighbour cell interference. Further, as a cell may change its DTX/DRX pattern dynamically while in use, communicating information about the applied cell DTX pattern(s) and/or cell DRX pattern(s) in real-time over network interfaces may increase the signalling overhead without sufficient gains in terms of mitigation of inter-cell interference. A requirement of real-time information exchange may limit the freedom of the scheduler to take real-time decisions on the best DTX/DRX pattern to activate at any given time.

One object of the present disclosure is to mitigate inter-cell interference. An example proposed herein enables a first NG-RAN node ("node A") to exchange cell DTX/DRX information/configuration with a neighbouring or second NG-RAN node ("node B") over a Xn interface. In some examples, cell DTX/DRX information/ configuration can be used at the receiving node B to avoid or mitigate one or more of: inter-cell interference in the downlink that may occur as a result of overlapping DTX active times in interfering cells; inter-cell interference in the uplink that may occur as a result of overlapping DRX active times in interfering cells. As cell DTX/DRX may reduce the cell capacity, in some examples, the cell DTX/DRX may be activated in a given node only when the traffic situation allows to do so, e.g., when the traffic is at low load. Therefore, in some examples, the network signaling may have the following roles: exchange information between neighbour nodes about the start and stop of an energy saving (ES) operation based on cell DTX/DRX; exchange information between neighbour nodes about the applied cell DTX/DRX parameters during a cell DTX/DRX-based energy saving operation.

In some examples, cell DTX information/configuration may include one or more of: a list of applicable cell DTX patterns per cell controlled by node A that is neighbor to one or more cells controlled by node B, which may be applied when cell DTX is enabled in the given cell; a time window during which cell DTX may be enabled and/or a cell DTX pattern may be used; an indication of inactivity probability information defining the probability of not transmitting during the active period of a given cell DTX pattern when such cell DTX pattern is in use; an indication of activity probability information defining the probability of transmitting during the inactive period of a given cell DTX pattern, when such cell DTX pattern is in use.

In some examples, the cell DRX information/configuration may include one or more of: a list of applicable cell DRX patterns per cell controlled by node A that is neighbour to one or more cells controlled by node B, which may be applied when cell DRX is enabled in the given cell; a time window during which cell DRX may be enabled and/or a cell DRX pattern may be used; an iindication of the inactivity probability information defining the probability of no UE transmissions during the active period of the cell DRX pattern, when such cell DRX pattern is in use; an indication of the activity probability information defining the probability of UE transmissions during the inactive period of the cell DRX pattern, when such cell DRX pattern is in use.

In some examples, the cell DTX and DRX configurations are separate (e.g., cell DTX has different configuration parameters compared to the cell DRX configuration parameters).

In some examples, there is a single cell DTX + DRX configuration e.g., cell DTX has the same configuration parameters as the cell DRX configuration parameters. In some examples, DTX and DRX information will help neighboring NG-RAN nodes to avoid interference and achieve network energy saving.

Accordingly, the present disclosure proposes one or more new information elements (IEs) or parameters. These new proposed IEs include a cell activity bitmap IE and an activity probability vector IE. In some examples, the cell activity bitmap IE and/or activity probability vector IE are used to implement or perform the indication of cell activity/inactivity probability information defining the probability of a cell transmitting / not transmitting during the active period of a given cell DTX/DRX pattern, when such DTX/DRX pattern is in use. The cell activity bitmap IE and/or activity probability vector IE may help the NG-RAN node to probabilistically define the periods where the transmission/reception may happen during a DTX/DRX cycle for a given DTX/DRX pattern. For example, the periods may be defined in terms of one or more slots or subframes, or another time unit. It will be appreciated that where reference is made to an indication or probability of "cell activity", this may also cover an indication or probability of cell inactivity. Therefore, in some examples cell activity, whether active or inactive, may be referred to as an activity status.

In examples, the cell activity bitmap IE comprises an IE wherein each element of the bitmap may represent the cell activity at a slot, subframe or another time unit in the cell DTX/DRX cycle. In some examples, the bitmap may be defined as a vector of length equal to the number of time units within the cell DTX/DRX cycle length. Each element of the bitmap may have a value equal to either 1 or 0. The 1s (which may be referred to as a first value) indicate that the corresponding time unit will likely be used for transmission/reception. The 0s (which may be referred to as a second value) indicate no transmission/reception on the corresponding time unit. In some examples, the bitmap may be defined as a vector of length equal to the number of time units within the cell DTX/DRX active period. For example, the vector may be defined based on the cell DTX/DRX on-duration. In some examples, distinct bitmaps may be defined for cell DTX (cell activity in downlink) and cell DRX (cell activity in uplink). In some examples, along with the cell activity bitmap, a probability value may be provided, which defines the likelihood of cell activity for the 1s in the bitmap. In some examples, along with the cell activity bitmap, two probability values are provided, which define the likelihood of cell activity for the 1s in the bitmap during active and inactive time respectively.

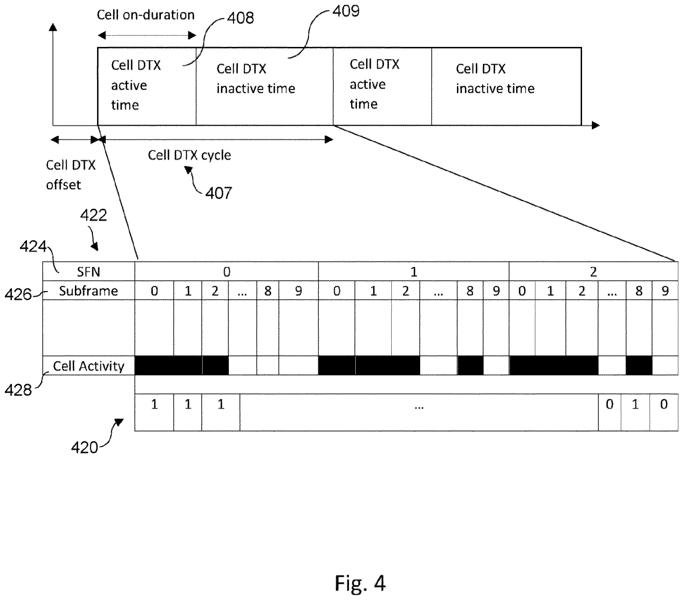

An example of a cell activity bitmap on the subframe level in case of periodic traffic is shown in Fig. 4. The bitmap is schematically shown at 420, and relates to a cell DTX cycle 407, which includes an active time period 408 and an inactive time period 409. The bitmap 420 is associated with corresponding information 422, which may be in the form of a table. For example, the information 422 may include a mapping of the following information relating to the cell DTX cycle 407: system frame number (SFN) 424; subframe number 426; cell activity 428. For example, the black entries in cell activity row 428 and the 1s in bitmap 420 correspond to subframes where the cell is active. Likewise, the blank entries in cell activity row 428 and the 0s in bitmap 420 correspond to subframes where the cell is inactive. In some examples, in case of periodic traffic in a cell, where there is no jitter, the slots or the subframes within the cell DTX/DRX active period may all be used for transmission.

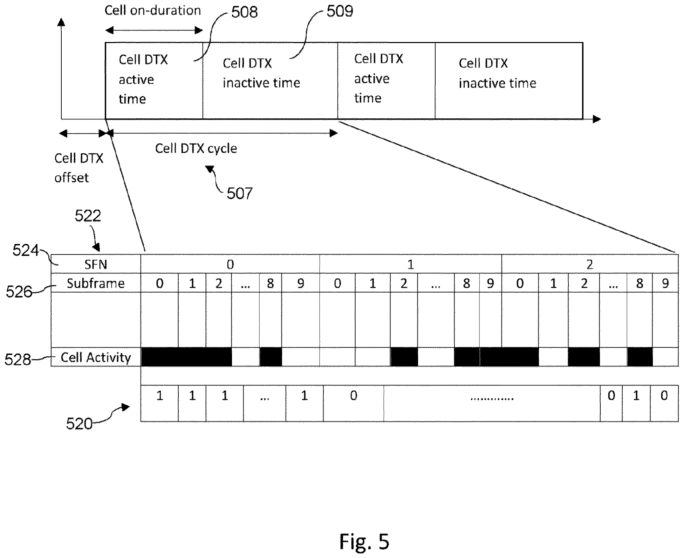

In some examples, in case of non-periodic traffic, the cell may mute some slots or subframes within the DTX/DRX active period and enter an energy-saving mode. An example of a cell activity bitmap 520 on the subframe level in case of non-periodic traffic is shown in Fig. 5. In this example, each bit of the bitmap 520 represents whether the slots of the corresponding subframe will be used for transmission (referred as "1") or not used for transmission (referred as "0"). In the example of Figure 5, in SFN 0 the cell is active in subframes 0, 1, 2, and 8 (see mapping between cell activity row 528 and bitmap 520). Features in common with Figure 4 are not repeated, for conciseness, but are given an equivalent reference numerals.

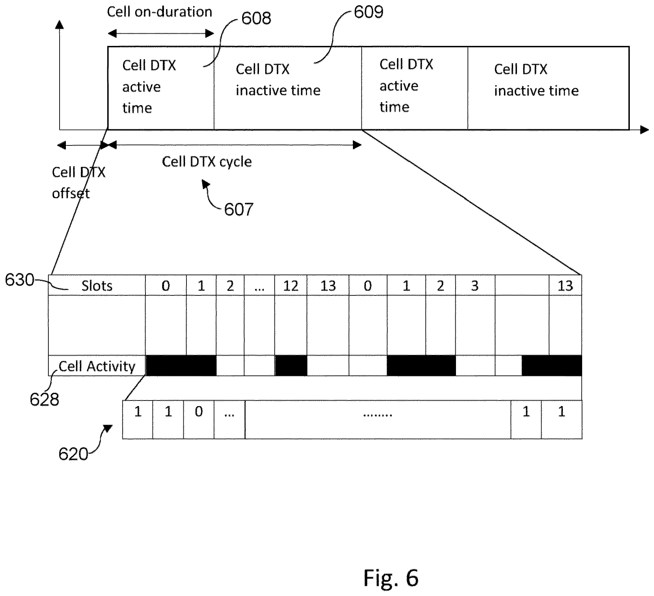

An example of the indication of cell activity in the cell activity bitmap on the slot level in case of non-periodic traffic is shown in Fig. 6. In this example, each bit of the bitmap 620 represents whether the corresponding slot 630 will be used for transmission (referred as "1") or not (referred as "0"). In the example of Figure 6, the first set of slots 0 to 13 correspond to cell DTX active time 608, and the second set of slots 0 to 13 correspond to cell DTX inactive time 609. For example the first three elements or bits 1, 1, 0 in bitmap 620 correspond to slots 0, 1 and 2 and so on. It will be noted that in some examples some active slots (represented by the black elements in cell activity row 628) are present during cell DTX inactive time 609. This is because, in some examples, in the cell inactive time 609 the cell may keep sending some control signals to avoid impacting idle and inactive UEs, so some control signals transmission could happen in the cell inactive time.

In some examples, an activity probability vector IE is provided. In some examples, in the activity probability vector IE each element of the vector represents a slot, subframe or another time unit in the cell DTX/DRX cycle. In some examples, the vector is of length equal to the number of time units within the cell DTX/DRX cycle length. In some examples, each element in the vector indicates the probability of cell activity, by providing a probability of a time unit being used for transmission or reception. This may be indicated by an integer taking values in the range 0 to 100, with value x indicating a probability of x/100. That is, in some examples the probability may be expressed in a decimal value. In some examples, the probability may be expressed as a percentage value. In comparison to the cell activity bitmap, the activity probability vector provides further granularity related to the likelihood of 1s and 0s in the bitmap. In some examples, a probability vector can be used to indicate a probability of cell inactivity.

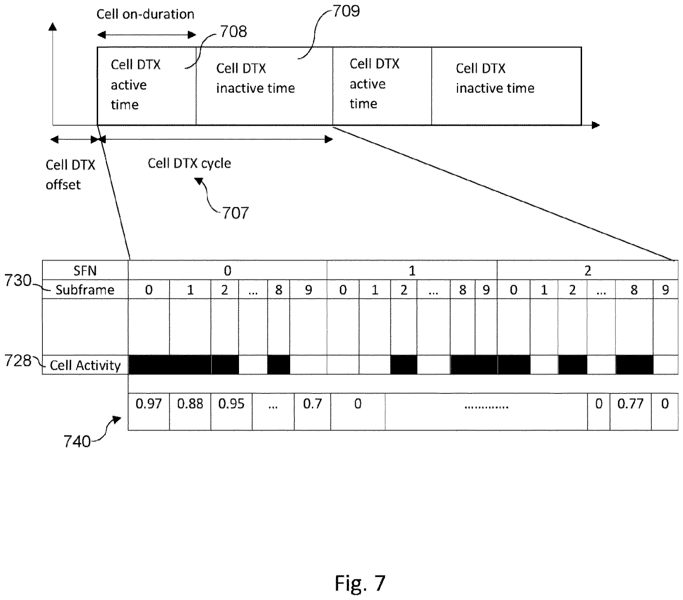

An example of a cell activity probability vector 740 on the subframe level is shown in Fig. 7. In this example, each element of the vector represents a probability that the corresponding subframe will be used for transmission. For example, in SFN 0, the probability of activity in subframes 0, 1, 2, 8 and 9 is shown in elements 740 as 0.97, 0.88, 0.95, 0.7 and 0 respectively.

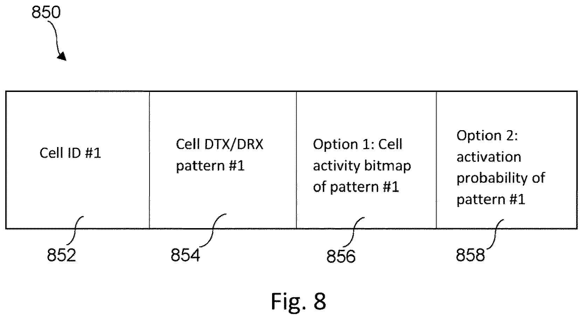

Fig. 8 shows an example DTX/DRX configuration 850. The DTX/DRX configuration 850 may include at least one of: a list of applicable cell DTX/DRX patterns, identified by a pattern ID and associated to a cell ID that may apply it; a time window during which cell DTX/DRX may be enabled and/or a cell DTX/DRX pattern may be used. For each cell DTX/DRX pattern, the DTX/DRX configuration comprises information including one or more of: the cell DTX/DRX cycle; the cell DTX/DRX offset; the cell DRX/DRX on-duration period; the cell activity bitmap; the activation probability vector. In the example of Figure 8, the DTX/DRX configuration 850 comprises a cell identifier (cell ID) 852; information of the cell DTX/DRX pattern 854 (e.g. broken down by slots or subframes); a cell activity bitmap 856 associated with the pattern; and an activation probability element 858 of the pattern. In some examples, a DTX/DRX configuration of the type shown in Figure 8 may be communicated between NG-RAN nodes.

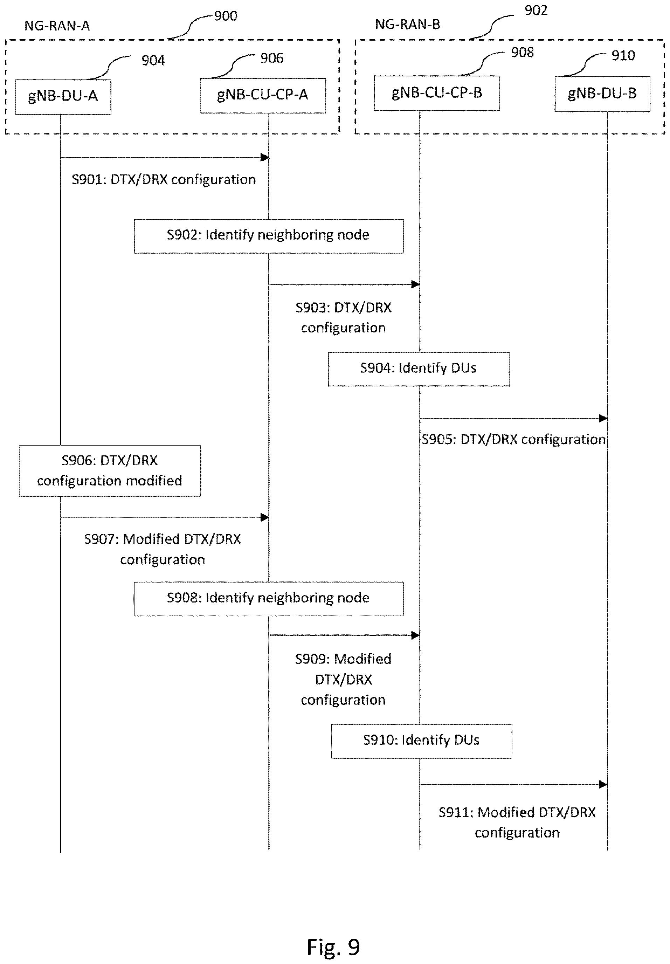

Some example signalling between NG-RAN nodes (i.e., inter-gNB signalling) is shown in Fig. 9. Fig. 9 shows an example setup/response procedure to exchange the cell DTX/DRX configuration between neighbour NG-RANs. In some examples, NG-RAN node A (NG-RAN-A) 900 may be a neighbouring node to NG-RAN node B (NG-RAN-B) 902. In some examples, NG-RAN-A 900 comprises a distributed unit (gNB-DU-A) 904 and a control unit (gNB-CU-CP-A) 906. In some examples, NG-RAN-B 902 comprises a distributed unit (gNB-DU-B) 910 and a control unit (gNB-CU-CP-B) 908.

In this example, at S901 gNB-DU-A 904 transmits a DTX/DRX configuration to gNB-CU-CP-A 906. In some examples, the DTX/DRX configuration is transmitted as part of a class 2 F1 procedure. In some examples, the DTX/DRX configuration comprises at least one of: a list of applicable cell DTX/DRX patterns, identified by a pattern ID and associated to a cell ID that may apply it; a time window during which cell DTX/DRX may be enabled and/or a cell DTX/DRX pattern may be used. In some examples, for each cell DTX/DRX pattern, the DTX/DRX configuration may comprise information including at least one of: the cell DTX/DRX cycle; the cell DTX/DRX offset; the cell DRX/DRX on-duration period; the cell activity bitmap; the activation probability vector.

At S902, gNB-CU-CP-A 906 identifies neighbouring node NG-RAN-B 902. In some examples, NG-RAN-B 902 requests the cell DTX/DRX configuration.

At S903, gNB-CU-CP-A 906 transmits the DTX/DRX configuration to gNB-CU-CP-B 908. In some examples, gNB-CU-CP-A 906 transmits the DTX/DRX configuration to gNB-CU-CP-B 908 over a Xn interface.

At S904, gNB-CU-CP-B 908 identifies the DUs that require the DTX/DRX configuration.

At S905, gNB-CU-CP-B 908 transmits the DTX/DRX configuration to the identified DUs 910. In this example, an identified DU may be considered as gNB-DU-B 910. In some examples, gNB-CU-CP-B 908 transmits the DTX/DRX configuration as part of a class 2 F1 procedure.

At S906, cell DTX/DRX values in gNB-DU-A 904 change and the cell DTX/DRX configuration is modified.

At S907, gNB-DU-A 904 transmits the modified DTX/DRX configuration to gNB-CU-CP-A 906. In some examples, the DTX/DRX configuration is transmitted as part of a class 2 F1 procedure. In some examples, the modified DTX/DRX configuration comprises at least one of: a list of applicable cell DTX/DRX patterns, identified by a pattern ID and associated to a cell ID that may apply it; a time window during which cell DTX/DRX may be enabled and/or a cell DTX/DRX pattern may be used. In some examples, for each cell DTX/DRX pattern, the modified DTX/DRX configuration may comprise information including at least one of: the cell DTX/DRX cycle; the cell DTX/DRX offset; the cell DTX/DRX on-duration period; the cell activity bitmap; the activation probability vector.

At S908, gNB-CU-CP-A 906 identifies neighbouring node NG-RAN-B 902. In some examples, NG-RAN-B 902 requires the modified cell DTX/DRX configuration.

At S909, gNB-CU-CP-A 906 transmits the modified DTX/DRX configuration to gNB-CU-CP-B 908. In some examples, gNB-CU-CP-A 906 transmits the DTX/DRX configuration to gNB-CU-CP-B 908 over a Xn interface.

At S910, gNB-CU-CP-B 908 identifies the DUs that require the modified DTX/DRX configuration.

At S911, gNB-CU-CP-B 908 transmits the modified DTX/DRX configuration to the identified DUs 910. In this example, an identified DU may be considered as gNB-DU-B 910. In some examples, gNB-CU-CP-B 908 transmits the modified DTX/DRX configuration as part of a class 2 F1 procedure.

In some examples, a similar procedure for exchanging cell DTX/DRX parameters is applicable to an intra-gNB scenario.

Advantages of some examples include optimizing information exchange between NG-RANs on cell DTX/DRX configuration, minimizing inter-cell interference and avoiding excessive Xn (overhead) signalling.

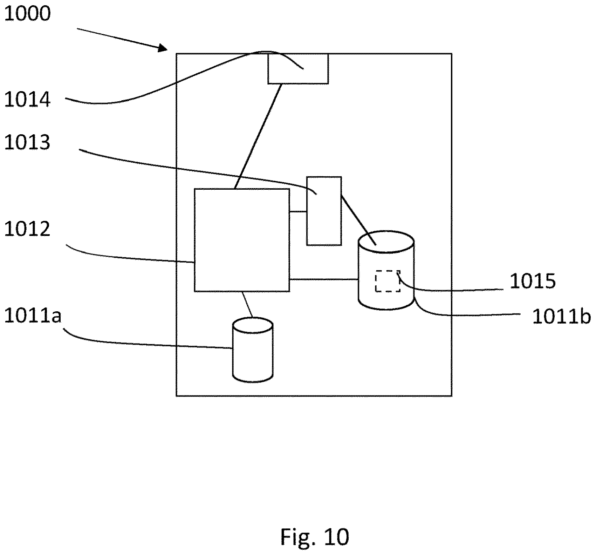

Figure 10 illustrates an example of a control apparatus 1000 for controlling a function of the 5GRAN or the 5GC as illustrated in Figure 1. The control apparatus may comprise at least one random access memory (RAM) 1011a, at least on read only memory (ROM) 1011b, at least one processor 1012, 1013 and an input/output interface 1014. The at least one processor 1012, 1013 may be coupled to the RAM 1011a and the ROM 1011b. The at least one processor 1012, 1013 may be configured to execute an appropriate software code 1015. The software code 1015 may for example allow to perform one or more steps to perform one or more of the present aspects. The software code 1015 may be stored in the ROM 1011b. The control apparatus 1000 may be interconnected with another control apparatus 1000 controlling another function of the 5GRAN or the 5GC. In some embodiments, each function of the 5GRAN or the 5GC comprises a control apparatus 1000. In alternative embodiments, two or more functions of the 5GRAN or the 5GC may share a control apparatus.

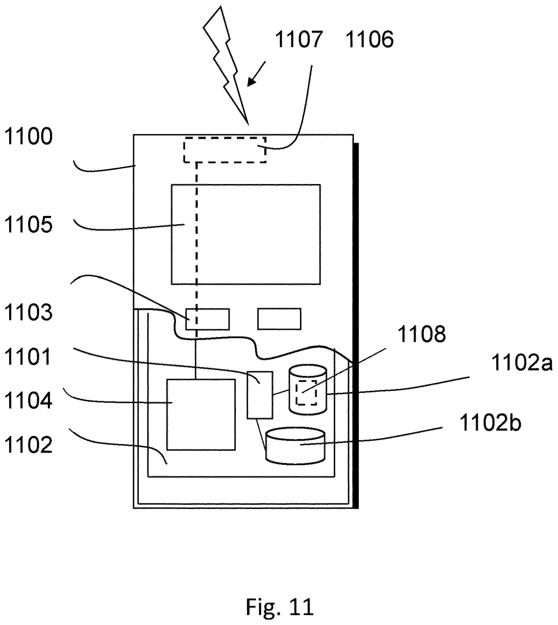

Figure 11 illustrates an example of a terminal 1100, such as the terminal illustrated in Figure 1. The terminal 1100 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 1100 may provide, for example, communication of data for carrying communications. The communications may be one or more of voice, electronic mail (email), text message, multimedia, data, machine data and so on.

The terminal 1100 may be provided with at least one processor 1101, at least one memory ROM 1102a, at least one RAM 1102b and other possible components 1103 for use in software and hardware aided execution of tasks it is designed to perform, including control of access to and communications with access systems and other communication devices. The at least one processor 1101 is coupled to the RAM 1102b and the ROM 1102a. The at least one processor 1101 may be configured to execute an appropriate software code 1108. The software code 1108 may for example allow to perform one or more of the present aspects. The software code 1108 may be stored in the ROM 1102a.

The processor, storage and other relevant control apparatus can be provided on an appropriate circuit board and/or in chipsets. This feature is denoted by reference 1104. The device may optionally have a user interface such as key pad 1105, touch sensitive screen or pad, combinations thereof or the like. Optionally one or more of a display, a speaker and a microphone may be provided depending on the type of the device.

The terminal 1100 may receive signals over an air or radio interface 1107 via appropriate apparatus for receiving and may transmit signals via appropriate apparatus for transmitting radio signals. In Figure 11 transceiver apparatus is designated schematically by block 1106. The transceiver apparatus 1106 may be provided for example by means of a radio part and associated antenna arrangement. The antenna arrangement may be arranged internally or externally to the mobile device.

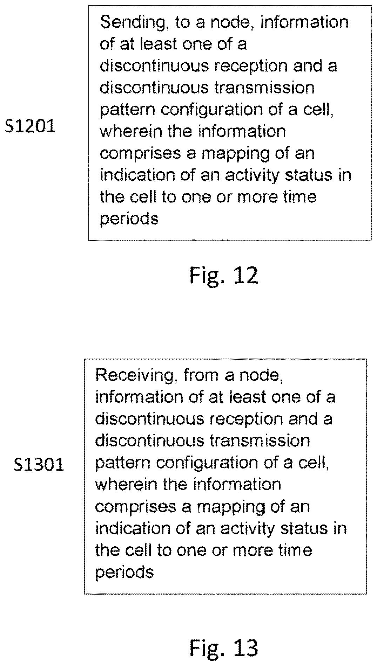

Figure 12 is a flow chart of a method according to an example. The flow chart of Figure 12 is viewed from the perspective of an apparatus. For example, the apparatus may comprise a base station.

As shown at S1201, the method comprises sending, to a node, information of at least one of a discontinuous reception and a discontinuous transmission pattern configuration of a cell, wherein the information comprises a mapping of an indication of an activity status in the cell to one or more time periods.

Figure 13 is a flow chart of a method according to an example. The flow chart of Figure 13 is viewed from the perspective of an apparatus. For example, the apparatus may comprise a base station.

As shown at S1301 the method comprises receiving, from a node, information of at least one of a discontinuous reception and a discontinuous transmission pattern configuration of a cell, wherein the information comprises a mapping of an indication of an activity status in the cell to one or more time periods.

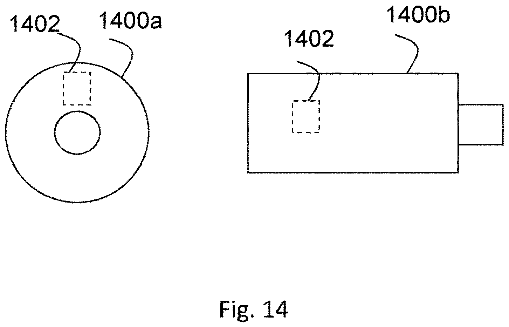

Figure 14 shows a schematic representation of non-volatile memory media 1400a (e.g. computer disc (CD) or digital versatile disc (DVD)) and 1400b (e.g. universal serial bus (USB) memory stick) storing instructions and/or parameters 1402 which when executed by a processor allow the processor to perform one or more of the steps of the method of Figure 12 or Figure 13.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus (1000) comprising:
means for sending, to a node, information of at least one of a discontinuous reception and a discontinuous transmission pattern configuration of a cell, wherein the information comprises a mapping of an indication of an activity status in the cell to one or more time periods (S1201).

2. The apparatus according to claim 1, wherein the mapping of an indication of an activity status in the cell comprises a bitmap information element.

3. The apparatus according to claim 2, wherein each bit in the bitmap represents a cell activity at a slot or subframe level in the at least one of a discontinuous reception and discontinuous transmission pattern.

4. The apparatus according to claim 2 or claim 3 wherein, in the bitmap, a first value is used to represent activity in the cell, and a second value is used to represent inactivity in the cell.

5. The apparatus according to any of claims 2 to 4, wherein the bitmap comprises a first bitmap corresponding to discontinuous reception and a second bitmap relating to discontinuous transmission.

6. The apparatus according to any of claims 1 to 5, wherein the indication of an activity status in the cell comprises a probability vector information element.

7. The apparatus according to claim 6, wherein the probability vector comprises a plurality of probability elements, each probability element representing the cell activity at a slot or subframe level in the at least one of a discontinuous reception and discontinuous transmission pattern.

8. The apparatus according to claim 7, wherein each probability element in the vector is expressed as a decimal or percentage value.

9. The apparatus according to any of claims 1 to 8, wherein the discontinuous reception or discontinuous transmission pattern configuration comprises one or more of: a time offset for initiation of the discontinuous reception or discontinuous transmission cycle; a duration of the discontinuous reception or discontinuous transmission cycle.

10. The apparatus according to any of claims 1 to 9, wherein the apparatus comprises a base station of the cell.

11. An apparatus (1000) comprising:
means for receiving, from a node, information of at least one of a discontinuous reception and a discontinuous transmission pattern configuration of a cell, wherein the information comprises a mapping of an indication of an activity status in the cell to one or more time periods (S1301).

12. The apparatus according to claim 11, wherein the apparatus comprises means for aligning operation of the apparatus with the at least one of a discontinuous reception and discontinuous transmission pattern configuration.

13. The apparatus according to claim 11 or claim 12, wherein the mapping of an indication of an activity status in the cell comprises a bitmap information element.

14. The apparatus according to claim 13, wherein each bit in the bitmap represents a slot or subframe in the at least one of a discontinuous reception and a discontinuous transmission pattern.

15. The apparatus according to claim 13 or claim 14 wherein, in the bitmap, a first value is used to represent activity in the cell, and a second value is used to represent inactivity in the cell.
